# EUROPÄISCHE PATENTSCHRIFT

(11) **EP 0 979 906 B1**
(45) Veröffentlichungstag und Bekanntmachung des Hinweises auf die Patenterteilung: **18.01.2006**
(21) Anmeldenummer: 99103753.2
(22) Anmeldetag: 26.02.1999
(51) Int. Cl.: E04B 1/64, E04D 5/12

(54) **Dampfsperrbahn**
Vapour barrier sheet
Feuille anti vapeur

(30) Priorität: 10.08.1998 DE 29814195 U
(43) Veröffentlichungstag der Anmeldung: 16.02.2000
(73) Patentinhaber: Marzouki, Taieb, 27321 Thedinghausen (DE); Haupt, Bertram, 22159 Hamburg (DE)
(72) Erfinder: Marzouki, Taieb, 27321 Thedinghausen (DE)
(74) Vertreter: Meissner, Bolte & Partner

(56) Entgegenhaltungen:
- WO-A-97/29256
- DE-A- 3 017 387
- DE-A- 4 326 437
- DE-B- 1 223 520
- DE-U- 29 707 174

## Beschreibung

Die Erfindung betrifft bituminöse Dampfsperrbahnen gemäß dem Oberbegriff des Anspruchs 1.

Dampfsperrbahnen werden meist im Flachdachbereich unter Dämmstoffschichten verlegt, was bedeutet, dass sie sowohl mit dem Untergrund wie auch mit den Dämmstoffschichten, zumeist Polystyrol, verklebt werden müssen. Hierzu werden in der Regel sogenannte kaltselbstklebende Bahnen eingesetzt, so dass der Einsatz von Heißbitumen bzw. das Aufschweißen der Sperrbahnen entfällt.

Die Dampfsperrbahnen bestehen generell aus einer Dämmfolie wie Metall, PE, Polyester etc., die gegebenenfalls eine Trägerschicht aus Kunststoff und eventuell Glasfasereinlagen aufweisen kann und die mindestens unterseitig, vorzugsweise aber beidseitig mit kaltselbstklebenden Bitumenschichten versehen ist. Die unterseitig vorgesehene kaltselbstklebende Situmenschicht ermöglicht die Verklebung der Dampfsperre mit dem Untergrund und die dampfdichte Verbindung der Bahnen miteinander, während die oberseitige kaltselbstklebende Bitumenschicht die Verbindung zu den Dämmstoffschichten herstellt Derartige Dampfsperrbahnen sind aus der DE-U-298 01 546 bekannt.

Diese Dampfsperrbahnen weisen auf den mit den kaltselbstklebenden Massen versehenen Schichten zum Verhindern des Verklebens während der Herstellung und Lagerung Abziehfolien auf, die vor der Verarbeitung entfernt werden müssen, was bei der unterseitigen Abziehfolie bei den üblichen Verklebetechniken relativ problemlos ist. Sehr viel mehr Schwierigkeiten ergeben sich beim Abziehen der oberseitigen Abziehfolie, wie sie beispielsweise im DE-U-298 01546 beschrieben ist. Wegen der vollflächigen Verwendung der kaltselbstklebenden Masse, im folgenden als KSK-Masse bezeichnet, ist ein Betreten während des Verarbeitens nicht möglich, so dass die saubere Entfernung der Abziehfolie arbeits- und zeitaufwendig ist. Dies hatte bereits dazu geführt, dass in der DE-U-298 01 546 vorgeschlagen und auch in die Praxis umgesetzt wurde, die oben liegende Fläche solcher Dampfsperrbahnen mit einer leichtschmelzenden dünnen Polyolefinfolie abzudecken, die dann während der Verarbeitung abgeflämmt wird. Diese Arbeitsweise erfordert aber den Einsatz von offenen Flammen, also zusätzlichen Arbeitsaufwand. Für eine gute Verklebung des Dämmstoffes ist eine vollständige Verschweißung der Polyolefinfolie nötig, was unter Bausteltenbedingungen häufig nicht gelingt.

Aus der DE-A-42 06 205 ist eine rollfähige Dampfsperrbahn bekannt und aus der DE-A-43 26 437 ein Kleber für diese Dampfsperrbahn. Die bekannte Dampfsperrbahn weist eine Polyethylen-Kunststoffschaumschicht auf, die oberseitig mit einer Folie vollflächig kaschiert ist. Ein Rand der Folie ist mit einem schmalen Silikon-Schutzstreifen überdeckt. Im Bereich des Silikon-Schutzstreifens sind auf der gegenüberliegenden Seite der Bahn Vertiefungen angeordnet, in denen Hot-Melt-Kleber angeordnet sind. Beim Aufrollen der bekannten Dampfsperrbahn verdeckt der Silikon-Schutzstreifen die in den Vertiefungen angeordneten Hot-Melt-Kleber, so dass es zu keiner Verklebung kommt und die Dampfsperrbahn abrollbar ist. Die Hot-Melt-Kleber dieser bekannten Dampfsperrbahn ermöglichen die Verklebung überlappender Bereiche nebeneinanderliegend verlegter Dampfsperrbahnen. Da bei dieser bekannten Dampfsperrbahn nur einseitig ein Kleber vorhanden ist, ist sie nicht geeignet, unterseitig auf dem Untergrund verklebt zu werden und oberseitig eine Verklebung zur auf der Dampfsperrbahn verlegten Dämmstoffschichten herzustellen. Da der Kleber bei der bekannten Dampfsperrbahn auf der Unterseite angeordnet ist und dort auch nur in einem streifenförmigen Randbereich, brauchen keine Vorkehrungen getroffen werden, um das Betreten der Dampsperrbahn während des Verarbeitens zu ermöglichen.

Der Erfindung liegt daher die Aufgabe zugrunde, eine ohne aufwendige technische Hilfsmittel verlegbare Dampfsperrbahn auch mit oberseitiger KSK-Massebeschichtung zu entwickeln, die die Nachteile bisher bekannter Dampfsperrbahnen nicht aufweist.

Eine Dampfsperrbahn zur Lösung dieser Aufgabe weist die Merkmale des Anspruchs 1 auf.

Überraschenderweise hat sich jetzt herausgestellt, dass es für eine hinreichende Verklebung der Dampfsperrbahnen insbesondere mit den darüberliegenden Dämmstoffschichten voll ausreicht, wenn die KSK-Masse nicht vollflächig, sondern in beabstandeten Flächen auf der Oberfläche der Bahn aufgetragen ist. Dadurch ergibt sich die Möglichkeit, die KSK-Flächen als Streifen mit dazwischen liegenden nichtklebenden Flächen, die mit einer Abdeckfolie versehen sind, anzuordnen, und zwar vorzugsweise in der Form, daß der Abstand zwischen den Klebeflächen in horizontaler Richtung mindestens etwa der doppelten Breite der Klebeflächen entspricht, so daß während der Verlegung der Bahnen ein Betreten der bereits verlegten Fläche ohne weiteres möglich wird.

Anstelle einer streifenförmigen Anordnung der KSK-Masse können auch andere Anordnungen gewählt werden, in dem beispielsweise die Abdeckung der freiliegenden Oberfläche mit einer nichtklebenden Kunststoffolie, insbesondere aus PE, in Form einer Lochfolie erfolgt, wobei entsprechende Lochreihen vertikal untereinander angeordnet sind, so daß in horizontaler Richtung ebenfalls ein Abstand zwischen den Klebeflächen eingehalten werden kann, der mindestens etwa der doppelten Breite der Klebeflächen entspricht. Die Löcher der Lochfolie können unterschiedlich ausgestaltet sein, beispielsweise kreisförmig, aber auch in Form von Ellipsen, Rauten usw. Form, Größe und Anordnung der Lochstreifen hängen von der erwünschten Klebefähigkeit und ggf. der Geometrie der zu sichernden Fläche ab. Vorzugsweise sind die Lochreihen aus kreisförmigen Löchern gebildet, deren Durchmesser unterschiedlich gewählt werden kann.

Die mit der KSK-Masse versehenen Streifen oder Reihen werden in üblicher Weise mit einer silikonisierten Abziehfolie versehen, die beim Verlegen entfernt wird.

Außerdem können die mit KSK-Masse versehenen Streifen in an sich bekannter Weise auch so an den Seiten der Bahn angeordnet werden, daß sie zumindest teilweise zum Verkleben der benachbarten Bahn genutzt werden können, falls die Bahnen nicht auf Stoß angeordnet werden.

Durch die erfindungsmäßige Gestaltung der Dampfsperrbahnen ergibt sich eine beträchtliche Einsparung sowohl an KSK-Masse wie auch an Abziehfolien, was neben der leichteren Verarbeitbarkeit auch zu einem günstigeren Herstellungspreis und zu einer geringeren Menge zu entsorgenden Materials führt.

Die Herstellung der neueren Dampfsperrbahnen kann entweder so erfolgen, daß der Auftrag der KSK-Masse bereits im Zuge der Herstellung der Bahnen durch eine entsprechende Einrichtung der Dachbahnmaschinen erfolgt oder in dem die KSK-Masse auf eine fertige Bahn aus Metallfolie, ggf. mit Trägerfolie und aufkaschierter Abdeckfolie bzw. Abdecklochfolie erfolgt. Die Herstellungsverfahren für solche kombinierten Bahnen sind dem Fachmann geläufig.

Im folgenden wird die Erfindung anhand der Abbildungen näher erläutert:
- Fig. 1: zeigt eine erfindungsgemäße Bahn mit einer Anordnung der KSK-Klebeflächen in Streifenform
- Fig. 2: zeigt eine solche Bahn unter Verwendung von Lochfolie

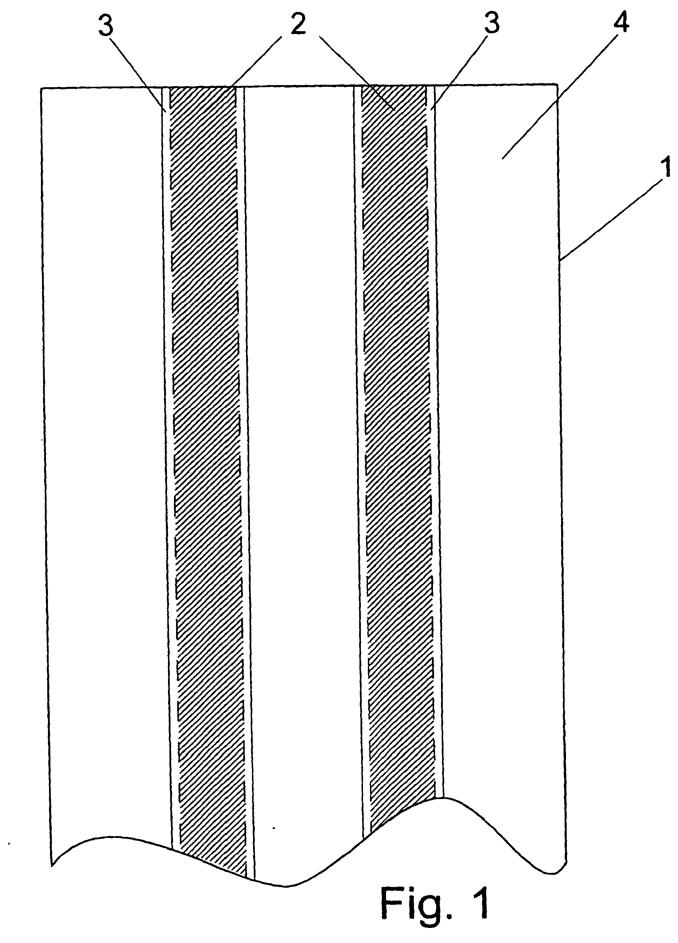

Wie in Fig. 1 dargestellt, weist die Dampfsperrbahn 1 mit einem üblichen Aufbau aus Metallfolie und Trägerschichten auf einer oder beiden Oberflächen nebeneinander liegende Streifen von KSK-Masse 2 auf, deren Oberfläche jeweils mit einer dünnen Abziehfolie 3 abgedeckt ist und eine nichtklebende Abdeckfolie 4, wobei die Breite der Abdeckfolie, die der Begehbarkeit der Bahn während des Verlegens dient, etwa das Doppelte der Breite der Klebeflächen ausmacht.

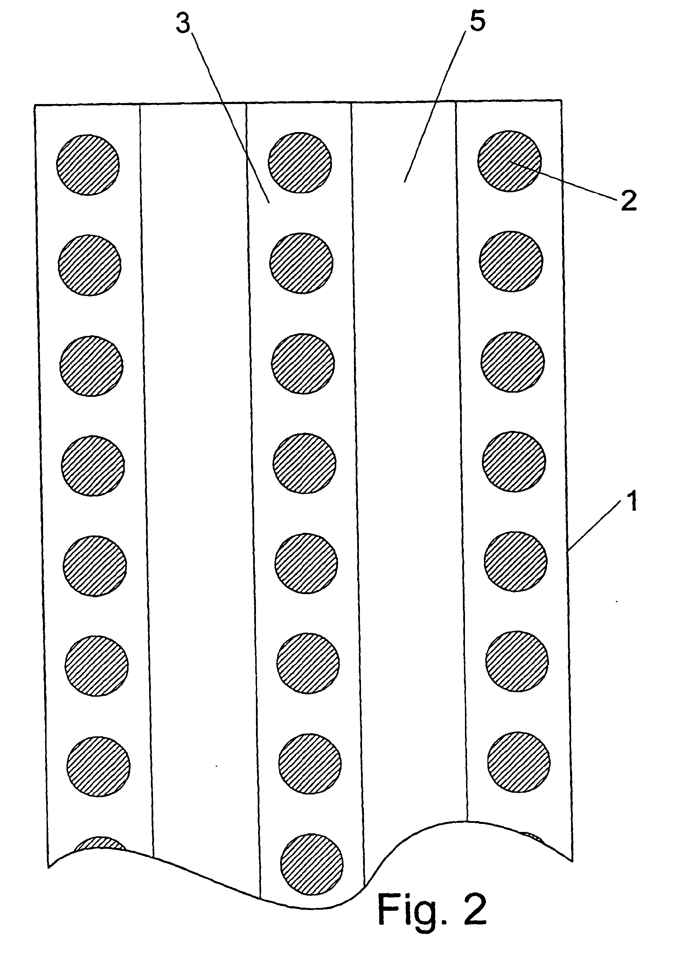

Aus Fig. 2 ergibt sich, daß die Klebeflächen, statt streifenförmige Anordnung aufzuweisen, auch beispielsweise in Form von mit KSK-Masse versehenen Lochreihen 2 vorgesehen sein können, zwischen denen sich die nichtklebende Folie 5 befindet. Die Lochreihen sind vorzugsweise im wesentlichen kreisförmig und senkrecht untereinander angeordnet. Diese Reihen sind, wie üblich, mit einer silikonisierten Abziehfolie 3 versehen.

Die erfindungsgemäßen Bahnen können nicht nur als Dampfsperrbahn im Bereich von Dachkonstruktionen eingesetzt werden, sondern auch überall dort im Bauwesen, wo eine Absperrung bwz. Abdichtung oder Dämmung von Wärme, Kälte, Schall, Feuchtigkeit oder Wasser notwendig ist und mit Hilfe von Dämmstoffschichten und kaltselbstklebenden Bahnen erreicht werden kann, z.B. bei der Absperrung oder Abdichtung von Kellergeschossen, Parkdecks, Tribünen etc. Die Anbringung der erfindungsgemäßen Bahnen kann, je nach Bedarf, in horizontaler oder vertikaler Richtung erfolgen. Daher lassen sich auch sonst schwierig zu bearbeitende vertikale Flächen schnell und sicher abdichten.

## Patentansprüche

1. Dampfsperrbahn (1) aus einer Metall- oder Kunststofffolie oder einer eine Metallfolie enthaltenden Trägerschicht, die jeweils beidseitig mit kaltselbst klebender Masse, KSK-Masse, versehen ist, **dadurch gekennzeichnet, dass** die KSK-Masse aus einer oberseitigen KSK-Massebeschichtung gebildet ist, die mit einer nicht-klebenden Abdeckfolie (4, 5) versehen ist, welche streifen- oder lochförmige KSK-Masseflächen (2) fretlässt, wodurch diese oberseitige Fläche der Dampfsperrbahn (1) beabstandete KSK-Masseflächen (2) erhält, und diese KSK-Masseflächen (2) mit einer Abziehfolie (3) versehen sind.

2. Dampfsperrbahn nach Anspruch 1, **dadurch gekennzeichnet, dass** die Flächen zwischen den KSK-Masseflächen (2) mit der nicht klebenden Abdeckfolie (4, 5) versehen sind.

3. Dampfsperrbahn nach Anspruch 1 oder 2, **dadurch gekennzeichnet, dass** die Abdeckfolie (5) der Dampfsperrbahn (1) aus einer Lochfolie besteht.

4. Dampfsperrbahn nach Anspruch 3, **dadurch gekennzeichnet, dass** Lochreihen der als Lochfolie ausgebildeten Abdeckfolie (5) im Wesentlichen kreisförmig und senkrecht untereinander angeordnet sind.

5. Dampfsperrbahn nach einem der Ansprüche 2 bis 4, **dadurch gekennzeichnet, dass** der Abstand zwischen den KSK-Masseflächen (2) quer zur Längsrichtung der Dampfsperrbahn (1) mindestens etwa der doppelten Breite der KSK-Massefläche (2) entspricht.

6. Verwendung von Dampfsperrbahnen nach einem der Ansprüche 1 bis 5 als Absperr-, Abdicht- oder Dämmungsmittel gegen Wärme, Kälte, Schall, Feuchtigkeit oder Wasser.

7. Verwendung nach Anspruch 6 in vertikaler oder horizontaler Anbringung.

## Claims

1. Vapour barrier membrane (1) comprising a metal or plastic sheet or a carrier layer comprising a metal sheet, provided in each case on both sides with cold-application self-adhesive compound, CSA compound, **characterized in that** the CSA compound is formed from a top-face coating of CSA compound that has been provided with a non-adhering cap sheet (4,5) which leaves open areas (2) of CSA compound in the form of strips or holes, so giving this top face of the vapour barrier membrane (1) spaced-apart areas (2) of CSA compound, and these areas (2) of CSA compound have been provided with a peel-off sheet (3).

2. Vapour barrier membrane according to Claim 1, **characterized in that** the areas between the areas (2) of CSA compound have been provided with the non-adhering cap sheet (4, 5).

3. Vapour barrier membrane according to Claim 1 or 2, **characterized in that** the cap sheet (5) of the vapour barrier membrane (1) is composed of a perforated sheet.

4. Vapour barrier membrane according to Claim 3, **characterized in that** rows of perforations of the cap sheet (5) configured as a perforated sheet are arranged substantially circularly and vertically below one another.

5. Vapour barrier membrane according to any one of Claims 2 to 4, **characterized in that** the spacing between the areas (2) of CSA compound transverse to the longitudinal direction of the vapour barrier membrane (1) corresponds at least approximately to twice the width of the area (2) of CSA compound.

6. Use of vapour barrier membranes according to any one of Claims 1 to 5 as barrier, sealing or insulating means against heat, cold, sound, moisture or water.

7. Use according to Claim 6 in vertical or horizontal installation.

## Revendications

1. Feuille anti-vapeur (1) constituée d'un film en métal ou en matière plastique ou d'une couche de support contenant un film métallique, respectivement pourvue sur les deux côtés d'une masse autocollante à froid, **caractérisée en ce que** la masse autocollante à froid est formée d'une couche supérieure de masse autocollante à froid pourvue d'un film de recouvrement (4, 5) non adhésif, qui laisse libres des surfaces de masse autocollante à froid (2) en forme de bandes ou de trous, ce qui permet d'obtenir des surfaces de masse autocollante à froid (2) à une certaine distance de la surface supérieure de la feuille anti-vapeur (1), ces surfaces de masse autocollante à froid (2) étant pourvues d'un film d'étirage (3).

2. Feuille anti-vapeur selon la revendication 1, **caractérisée en ce que** les surfaces situées entre les surfaces de masse autocollante à froid (2) sont pourvues du film de recouvrement (4, 5) non adhésif.

3. Feuille anti-vapeur selon la revendication 1 ou 2, **caractérisée en ce que** le film de recouvrement (5) de la feuille anti-vapeur (1) se compose d'un film perforé.

4. Feuille anti-vapeur selon la revendication 3, **caractérisée en ce que** des rangées de trous du film de recouvrement (5) configuré sous la forme d'un film perforé sont disposées les unes en dessous des autres de manière essentiellement circulaire et perpendiculaire.

5. Feuille anti-vapeur selon l'une des revendications 2 à 4, **caractérisée en ce que** la distance entre les surfaces de masse autocollante à froid (2), transversalement par rapport à la direction longitudinale de la feuille anti-vapeur (1), correspond au moins à environ le double de la largeur de la surface de masse autocollante à froid (2).

6. Utilisation de feuilles anti-vapeur selon l'une des revendications 1 à 5 en tant que moyens de blocage, d'étanchéité ou d'isolation contre la chaleur, le froid, le bruit, l'humidité ou l'eau.

7. Utilisation selon la revendication 6 avec une mise en place verticale ou horizontale.
